# EUROPEAN PATENT SPECIFICATION

(11) **EP 0 547 664 B1**
(45) Date of publication and mention of the grant of the patent: **18.10.1995**
(21) Application number: 92203783.3
(22) Date of filing: 04.12.1992
(51) Int. Cl.: B29C 51/14, B29C 51/42, B32B 15/08

(54) **Method of hot-forming a component by shaping a laminated metal and plastics material sheet**
Verfahren zur Herstellung eines Gegenstandes durch Warmverformung eines aus Metall und Kunststoff bestehenden Laminats
Procédé pour la fabrication d'un objet par thermoformage d'un laminé en métal et matériau plastique

(30) Priority: 19.12.1991 NL 9102127
(43) Date of publication of application: 23.06.1993
(73) Proprietor: HOOGOVENS GROEP B.V., NL-1970 CA IJmuiden (NL)
(72) Inventor: Boesenkool, Roelof, NL-1536 AG Markenbinnen (NL); Soellaart-Roelofsen, Maria Emerentiana, NL-1511 CR Oostzaan (NL); Veenstra, Elle Willem, NL-1827 PB Alkmaar (NL)
(74) Representative: Van Breda, Jacobus, Mr. Ir.

(56) References cited:
- GB-A- 1 175 915
- US-A- 2 952 042
- US-A- 3 939 024
- US-A- 4 272 475
- PATENT ABSTRACTS OF JAPAN vol. 013, no. 163 (M-816)19 April 1989 & JP-A-64 001 522 (NIPPON STEEL) 5 January 1989
- DATABASE WPIL Week 8718, Derwent Publications Ltd., London, GB; AN 87-125488 & JP-A-62 066 928 (MITSUI MINING & SMELTING) 26 March 1987

## Description

The invention relates to a method of hot-forming a component from a laminated sheet which has a thermoplastic plastics material layer sandwiched between two metal layers, wherein the sheet is shaped using a forming tool. By the term "component" is meant any finished or intermediate shape product obtained by shaping of the sheet.

A method as described above is known from GB patent specification no. 1092715. The known method is a hot-deformation process wherein the laminated sheet material is introduced in cold state into the forming tool which is then heated to above the softening temperature of the plastics material layer. The sheet material is heated in approximately 15 seconds before the final shaping takes place. The product formed in this way is then cooled in the tool from approximately 175°C down to approximately 95°C. Where components for mass production are involved, for example, in the automotive industry, this method therefore has an unacceptably long cycle time. Another inconvenience is the high energy consumption occurring because the tool has to be heated every time for each component being formed, up to approximately 175°C and then has to be cooled down to approximately 95°C.

For a prior art description of laminated sheet of the type to which this invention is applied, reference may be made to Modern Plastics International, April 1990, pages 58-60.

It is also mentioned for completeness that GB patent specification no. 1053040 (corresponding to Dutch application no. 6512561) describes a process of producing an article from aluminium foil coated with a thermoplastic resin, the foil being 0.13 mm thick. The temperature of the shaping process is unspecified, but a so-called "recovery" treatment at above 180°C to restore the formability of the aluminium prior to the shaping is described. It is mentioned that during the recovery treatment the plastics coating fused, and that satisfactory products were obtained within a few hours of the recovery treatment.

The main object of the invention is to provide a method by which mass production of components of shaped laminated sheet material as described above may be accomplished rapidly.

With such components dimensional stability and shape retention at increased temperatures are of great importance, so that another object of the invention is to provide a method whereby the components formed have improved properties of stability and shape retention at such temperatures as occur in subsequent treatment or processing of the component and in its use as end product.

A further object of the invention is to reduce energy consumption while maintaining the necessary properties.

The method in accordance with the invention is characterized in that directly before it comes into contact with the forming tool the sheet material has a temperature lying between the ISO/A temperature and the Vicat B temperature of the plastics material layer.

The ISO/A and Vicat B temperatures of thermoplastic materials are generally known and are determined in accordance with international standards. ISO/A temperature is defined in ISO 75 (DIN 53461) and Vicat B temperature in DIN ISO 306. Since in the invention, the sheet does not have to be heated by contact with the forming tool, the cycle time may be reduced considerably. Surprisingly, at temperatures in the temperature range indicated, the component formed also has excellent shape retention under subsequent thermal loading. Precisely how this remarkable result may be related to the selected material parameters, i.e. ISO/A and Vicat B temperatures, still remains a subject for further research.

Preferably in the method in accordance with the invention the component is removed from contact with the forming tool directly after shaping. Thus the component is not cooled down in the tool, so that the cycle time is reduced yet further and energy consumption is decreased. Cooling in the tool has been found unnecessary.

Advantageously, directly before it comes into contact with the forming tool, the sheet material has a temperature close to the ISO/A temperature of the plastics material layer, i.e. not more than 20 centigrade degrees, preferably not more than 10 centigrade degrees above the ISO/A temperature. By definition the ISO/A temperature is lower than the Vicat B temperature so that this feature also achieves a further energy saving without the intended beneficial effects being lost.

When in the method of the invention shaping takes place with a heatable forming tool, preferably during shaping the forming tool has a temperature in the vicinity (i.e. within 10 centigrade degrees) of the temperature of the sheet material directly before it comes into contact with the forming tool. This method is preferably used for manufacturing complicated components with a high degree of deformation in order to avoid intense cooling of the sheet material against the forming tool.

In the method of the invention, during shaping, the sheet may be held at at least part or parts of its periphery or edge by holding means, the holding means preferably having a temperature during the shaping in the vicinity (i.e. within 10 centigrade degrees) of the temperature of the sheet material directly before it comes into contact with the forming tool. This has the particular advantage that excessive cooling of the sheet material also will not occur at the holding means.

The sheet material used is preferably one with metal layers made of aluminium. Especially with sheet material with metal layers of aluminium, it has been found that forming in accordance with the method invented leads to good results for the applications intended. Nevertheless the invention is applicable to sheet material having other metal layers, e.g. metal layers of steel (including stainless steel) and copper.

Preferably the plastics material layer of the sheet material is selected from the group consisting of
acrylonitrile-butadiene-styrene copolymer
polyamide
polybutylene terephthalate
polycarbonate
polyethylene
polyethylene terephthalate, and
polypropylene.
This selection is also found to have positive influence on the desired properties for the intended applications. Nevertheless the invention is applicable in principle to all thermoplastic synthetic materials.

A surprisingly good thermal shape retention is achieved when crystalline polypropylene is selected for the plastics material layer. The thermal shape retention of such a component formed in accordance with the method of the invention displays a markedly significant improvement compared with forming at, for example, room temperature.

In a particularly effective embodiment of the method of the invention the shaping is or includes stretching of the sheet material. In this context stretching is taken to be a method wherein the sheet is clamped at its edges and a punch is moved in a direction perpendicular to the sheet in such a way that the sheet adopts the shape of the active surface of the punch, typically without a die having to be used there. Components formed in this way possess a high degree of thermal shape retention. It is believed that this result is a consequence of the fact that in stretching there are not only bending but also pulling actions, so that the material is plastically deformed uniformly over the thickness. On release no residual stresses or at least only slight residual stresses are present.

The invention will now be illustrated by way of non-limitative example with reference to drawings, in which:
Fig. 1 shows the prior art apparatus for carrying out the known method described above;
Fig. 2 shows an embodiment of the method in accordance with the invention;
Fig. 3 shows an apparatus for bending a test piece for determining the thermal shape retention;
Fig. 4 shows an indication of the thermal shape retention of an Al-PET(polyethylene terephthalate)-Al test piece at various deforming temperatures;
Fig. 5 shows an indication of the thermal shape retention of an Al-PP(polypropylene)-Al test piece at various deforming temperatures; and
Fig. 6 shows a method in accordance with the invention wherein the shaping includes stretching.

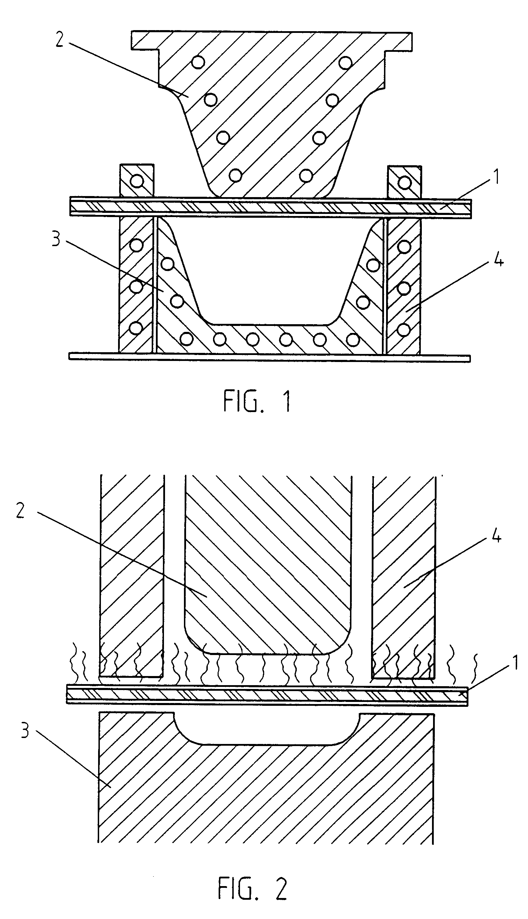

First the prior art method is illustrated in Fig. 1. In the case of forming a component in accordance with the known method (see Fig. 1) the cold laminated sheet material 1 is heated by contact with the heated punch 2 for approximately 15 seconds. The shaping is then carried out by pressing the sheet material 1 by means of the punch 2 fully into the die 3. In the known method, the sheet holders 4 may also be cooled. After pressing the component formed is cooled in the tool from approximately 175°C down to approximately 95°C.

As shown in Fig. 2, in accordance with the present invention, before coming into contact with the active surfaces of the forming tool 2,3, the sheet material 1 has already been brought up to a temperature lying between the ISO/A temperature and the Vicat B temperature of the plastics material layer of the sheet 1. Here punch, die and blank holders may be made heatable so that they are maintained at the desired temperatures, as discussed above. Shaping in accordance with the invention takes place quickly without pauses in the tool 2,3 for heating and cooling so that rapid mass production is feasible. The pre-heating and the cooling of the sheet 1 before and after contact with the tool 2,3 takes place outside the tool. Any appropriate heating and cooling methods may be used.

Figs. 1 and 2 indicate that the sheet 1 has exterior layers of metal sandwiching an intermediate layer of thermoplastic plastics material, i.e. synthetic resin. Typically, the total thickness is 1.0 to 2.0 mm, with the plastics material layer being for example 50 to 80% of this thickness.

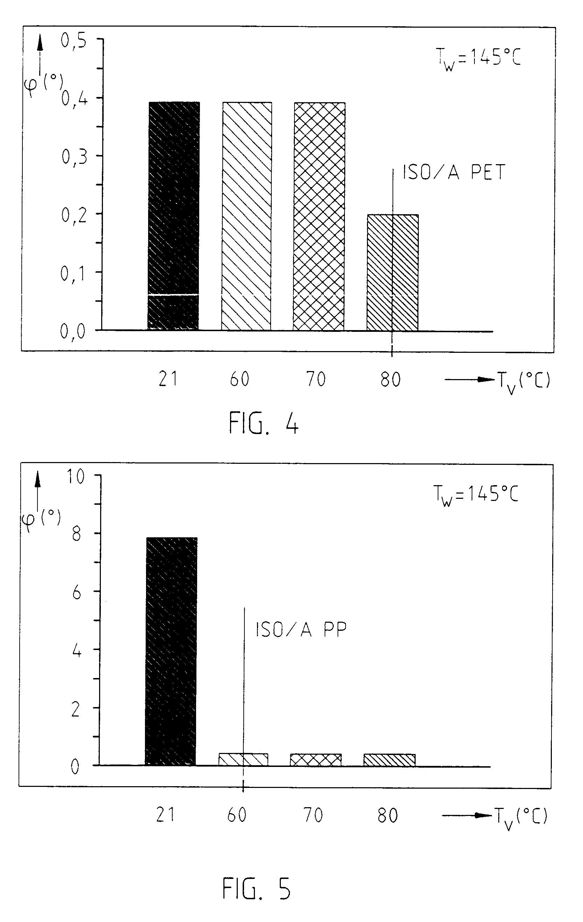

In order to test the thermal shape retention of various components formed in accordance with the invention, test pieces were shaped using the apparatus which is shown in Fig. 3. The test pieces measuring 90mm x 150mm and 1.2mm thick (0.2 mm Al - 0.8 mm thermoplastic material - 0.2 mm Al) were hot-formed (bent) at different temperatures using bending cylinders 6 cooperating with a mandrel 7. Following cooling, the components were placed in a furnace in order to replicate a subsequent temperature loading of the shaped component. The furnace temperature applied was 145°C. Having been left approximately 30 minutes in the furnace the test pieces were allowed to cool and the deviation of the bend angle of the component from the original angle γ of the forming mandrel 7 was measured. Any difference from that original angle is called the extended angle of elasticity φ. The extended angle of elasticity of the test piece can be interpreted as a measure for the thermal shape retention of a component manufactured from the relevant sheet material.

The results are given in Figs. 4 and 5, for sheet Al-PET-Al and Al-PP-Al respectively. Along the horizontal axis are the deformation temperatures Tᵥ of the shaping method, and up the vertical axis is the extended angle of elasticity φ. A small extended angle of elasticity signifies a high thermal shape retention. The thermal loading temperature which the test piece underwent following shaping is indicated by T_{w}. The ISO/A temperature is also indicated.

Figs. 4 and 5 clearly show that if the sheet material has a temperature directly before forming close to the ISO/A temperature of the plastic layer, an improvement in the thermal shape retention occurs. Particularly in the case of PP in Fig. 5 this improvement is very noticeable. Here, according to Fig. 4 and Fig. 5, the suitable deformation temperature is apparently approximately 80°C for PET and 60°C for PP, which respective temperatures do indeed correspond with the respective ISO/A temperatures. The inventors have found that the Vicat B temperature forms a suitable upper limit for the method.

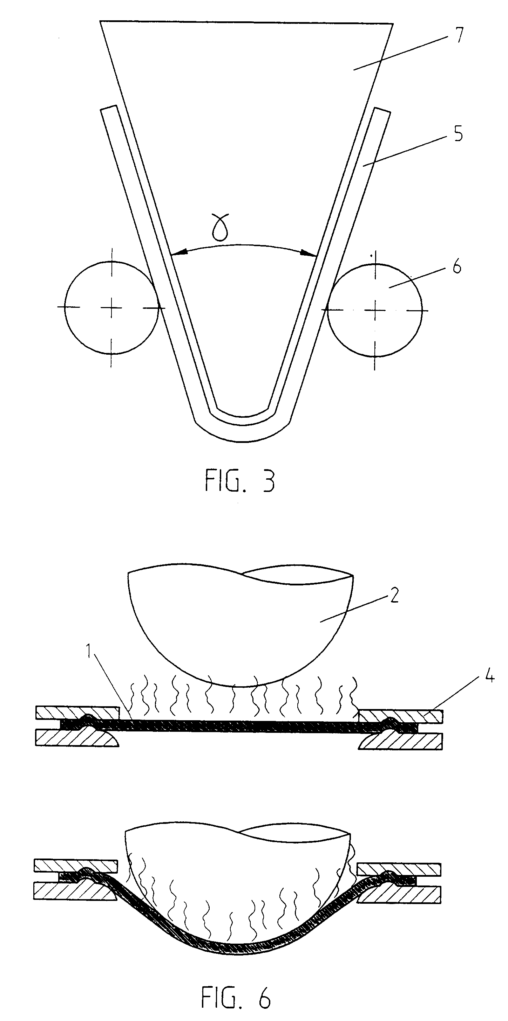

If it is possible technically, it is preferable to form the component by a shaping process which involves stretching, see Fig. 6. Here the sheet material 1 is pre-heated prior to shaping, clamped into holders 4 and then stretched by means of the punch tool 2. Here too, depending on such parameters as cycle time, ISO/A temperature and Vicat B temperature of the plastics material layer, it may be advantageous to make the punch heatable.

## Claims

1. Method of hot-forming a component from a laminated sheet (1) which comprises a thermoplastic plastics material layer sandwiched between two metal layers, wherein the sheet (1) is shaped by means of a forming tool (2,3) characterized in that, directly before the sheet (1) comes into contact with the forming tool (2,3), the sheet (1) has a temperature between the ISO/A temperature and the Vicat B temperature of the thermoplastic layer.

2. Method according to claim 1 wherein the component is removed from contact with the forming tool (2,3) directly after the shaping.

3. Method according to claim 1 or claim 2 wherein, directly before the sheet (1) comes into contact with the forming tool (2,3) the sheet has a temperature which is not more than 20 C degrees above said ISO/A temperature.

4. Method according to any one of claims 1 to 3 wherein during the shaping the forming tool (2,3) has a temperature within 10 C degrees of said temperature of said sheet directly before it comes into contact with the forming tool.

5. Method according to any one of claims 1 to 4 wherein during the shaping the sheet (1) is held at at least a part of its periphery by holding means (4), said holding means (4) during the shaping having a temperature within 10 C degrees of said temperature of said sheet directly before it comes into contact with the forming tool.

6. Method according to any one of claims 1 to 5 wherein said metal layers of said sheet are of aluminium.

7. Method according to any one of claims 1 to 6 wherein said thermoplastic plastics material is selected from
acrylonitrile-butadiene-styrene copolymer
polyamide
polybutylene terephthalate
polycarbonate
polyethylene
polyethylene terephthalate, and
polypropylene.

8. Method according to claim 7 wherein said plastics material is crystalline polypropylene.

9. Method according to any one of claims 1 to 8 wherein the shaping includes stretching of the sheet.

## Patentansprüche

1. Verfahren zur Herstellung eines Gegenstandes durch Warmverformung aus einer Laminatplatte (1), die eine thermoplastische Kunststoffmaterialschicht aufweist, die zwischen zwei Metallschichten in Sandwichbauweise angeordnet ist, worin die Platte (1) mittels eines Formwerkzeugs (2, 3) geformt wird,
dadurch **gekennzeichnet,**
daß direkt bevor die Platte (1) in Kontakt mit dem Formwerkzeug (2, 3) kommt, die Platte (1) eine Temperatur zwischen der ISO/A Temperatur und der Vicat-B-Temperatur der thermoplastischen Schicht hat.

2. Verfahren nach Anspruch 1, worin der Gegenstand direkt nach dem Formen außer Kontakt von dem Formwerkzeug (2, 3) entfernt wird.

3. Verfahren nach Anspruch 1 oder Anspruch 2, worin direkt bevor die Platte (1) in Kontakt mit dem Formwerkzeug (2, 3) kommt, die Platte eine Temperatur hat, die nicht mehr als 20° C oberhalb der ISO/A-Temperatur liegt.

4. Verfahren nach einem der Ansprüche 1 bis 3, worin während des Formens das Formwerkzeug (2, 3) eine Temperatur innerhalb von 10° C von der Temperatur der Platte direkt bevor diese in Kontakt mit dem Farmwerkzeug kommt, hat.

5. Verfahren nach einem der Ansprüche 1 bis 4, worin die Platte (1) während des Formens an wenigstens einem Teil ihres Umfangs durch Haltemittel (4) gehalten wird, wobei die Haltemittel (4) während des Formens eine Temperatur innerhalb von 10° C von der Temperatur der Platte direkt bevor diese in Kontakt mit dem Formwerkzeug kommt, hat.

6. Verfahren nach einem der Ansprüche 1 bis 5, worin die Metallschichten der Platte aus Aluminium sind.

7. Verfahren nach einem der Ansprüche 1 bis 6, worin das thermoplastische Kunststoffmaterial ausgewählt ist aus
Acrylnitril-Butadien-Styrol-Copolymer,
Polyamid,
Polybutylen-Terephthalat,
Polycarbonat,
Polyethylen,
Polyethylen-Terephthalat und
Polypropylen.

8. Verfahren nach Anspruch 7, worin das Kunststoffmaterial ein kristallines Polypropylen ist.

9. Verfahren nach einem der Ansprüche 1 bis 8, worin das Formen ein Dehnen der Platte umfaßt.

## Revendications

1. Procédé pour le thermoformage d'une feuille stratifiée (1) qui comprend une couche de matière thermoplastique prise en sandwich entre deux couches de métal, la feuille (1) étant mise en forme au moyen d'un outil de formage (2, 3), caractérisé en ce que, immédiatement avant que la feuille ne vienne en contact avec l'outil de formage (2, 3), la feuille (1) se trouve à une température comprise entre la température ISO/A et la température Vicat B de la couche thermoplastique.

2. Procédé selon la revendication 1, dans lequel on sépare de l'outil de formage (2, 3) le composant immédiatement avant la mise en forme.

3. Procédé selon la revendication 1 ou la revendication 2, dans lequel, immédiatement avant que la feuille (1) ne vienne en contact avec l'outil de formage (2, 3), la feuille se trouve à une température qui n'est pas supérieure à 20°C au dessus de ladite température ISO/A.

4. Procédé selon l'une quelconque des revendications 1 à 3, dans lequel, pendant la mise en forme, l'outil (2, 3) se trouve à une température comprise dans une plage de température de 10°C autour de ladite température de ladite feuille avant qu'elle ne vienne en contact avec l'outil de formage;

5. Procédé selon l'une quelconque des revendications 1 à 4, dans lequel, pendant la mise en forme, la feuille (1) est supportée, en au moins une partie de sa périphérie, à l'aide d'un moyen de support (4), ledit moyen de support (4), pendant la mise en forme, se trouvant à une température comprise dans une plage de 10°C autour de ladite température de ladite feuille immédiatement avant qu'elle ne vienne en contact avec l'outil de formage.

6. Procédé selon l'une quelconque des revendications 1 à 5, dans lequel les couches de métal de ladite feuille sont en aluminium.

7. Procédé selon l'une quelconque des revendications 1 à 6, dans lequel, ladite matière thermoplastique est choisie parmi les matières suivantes:
un copolymère d'acrylonitrile-butadiène-styrène,
un polyamide
le poly(téréphtalate de butylène)
le polycarbonate
le polyéthylène
le poly(téréphtalate d'éthylène), et
le polypropylène.

8. procédé selon la revendication 7, dans lequel ladite mafière plastique est du polypropylène cristallin.

9. Procédé selon l'une quelconque des revendications 1 à 8, dans lequel la mise en forme comprend l'étirage de la feuille.
